# EUROPEAN PATENT SPECIFICATION

(11) **EP 3 011 080 B1**
(45) Date of publication and mention of the grant of the patent: **12.07.2017**
(21) Application number: 14726131.7
(22) Date of filing: 21.05.2014
(51) Int. Cl.: C25D 3/06, C25D 5/12, C25D 9/08, C25D 9/10, C25D 17/10, C25D 5/36, C09D 5/08, C25D 5/50

(54) **METHOD FOR MANUFACTURING CHROMIUM-CHROMIUM OXIDE COATED SUBSTRATES**
VERFAHREN ZUR HERSTELLUNG VON CHROM-CHROMOXIDBESCHICHTETEN SUBSTRATEN
PROCÉDÉ DE FABRICATION DE SUBSTRATS REVÊTUS DE CHROME-OXYDE DE CHROME

(30) Priority: 20.06.2013 EP 13003159
(43) Date of publication of application: 27.04.2016
(73) Proprietor: Tata Steel IJmuiden BV, 1951 JZ Velsen-Noord (NL)
(72) Inventor: WIJENBERG, Jacques Hubert Olga Joseph, NL-1970 CA IJmuiden (NL)
(74) Representative: Bodin, Andre
(86) International application number: PCT/EP2014/060420
(87) International publication number: WO 2014/202316

(56) References cited:
- EP-A1- 0 747 510
- US-A- 2 704 273
- US-A- 4 520 077
- US-A- 5 560 815
- US-A1- 2010 108 532

## Description

The present invention relates to a method for manufacturing chromium-chromium oxide coated substrates and to the chromium-chromium oxide substrates thus produced. The present invention further relates to the use of the chromium-chromium oxide coated substrates in packaging applications.

Electrodeposition is the process of depositing a metallic coating on a substrate by passing an electrical current through an electrolyte solution that contains the metal to be deposited.

Traditionally, the electrodeposition of chromium was achieved by passing an electrical current through an electrolyte solution containing hexavalent chromium (Cr(VI)). US4520077 discloses a method for depositing a chromium metal-chromium oxide coating on a substrate in a single step from an hexavalent chromium Cr(VI) solution. However, the use of Cr(VI) electrolyte solutions is soon to be banned in view of the toxic and carcinogenic nature of Cr(VI) compounds. Research in recent years has therefore focussed on finding suitable alternatives to Cr(VI) based electrolytes. One alternative is to provide a trivalent chromium based electrolyte since such electrolytes are inherently less toxic and afford chromium coatings similar to those that are deposited from Cr(VI) electrolyte solutions.

Despite the use of trivalent chromium electrolytes, one major concern is the possible oxidation of trivalent chromium to hexavalent chromium at the anode. Besides water also some Cr(III) might be oxidised unintentionally to Cr(VI) at the anode, because the electrode potentials for the oxidation of water to oxygen and the oxidation of Cr(III) to Cr(VI) are very close.

US2010/0108532 discloses a process for plating chromium from a trivalent chromium plating bath. According to US2010/0108532 the electrolyte comprises a chromium metal added as basic chromium sulphate, sodium sulphate, boric acid and maleic acid. The electrolyte further comprises manganese ions to reduce the formation of excessive amounts of hexavalent chromium. Although the formation of excessive amounts of hexavalent chromium is avoided, hexavalent chromium is nevertheless still produced.

Unlike US2010/0108532, EP0747510 describes a method for depositing chromium oxides from a trivalent chromium solution that is free from added buffer. Due to the absence of a buffer the pH increases in the cathode film, which in turn allows for the direct formation of chromium oxide on the cathode. According to EP0747510, the formation of hexavalent chromium at the anode may be prevented or reduced by selecting a suitable anode, e.g. platinum, platinised-titanium, nickel-chromium or carbon, and by employing a depolariser such as potassium bromide. However, the trivalent chromium electrolyte solution employed in EP0747510 also contains potassium chloride, which is converted into chlorine during the electrodeposition process. Chlorine gas is potentially harmful to the environment and to the workers and is therefore undesirable.

According to US6004448 two different electrolytes are required for the production of ECCS via trivalent Cr chemistry. Cr metal is deposited from a first electrolyte with a boric acid buffer and subsequently Cr oxide is deposited from a second electrolyte without a boric acid buffer. According to this patent application in a continuous high speed line the problem arises that boric acid from the first electrolyte will be increasingly introduced in the second electrolyte due to drag-out from the vessel containing the first electrolyte into the vessel containing the second electrolyte and as a result Cr metal deposition increases and Cr oxide deposition decreases or is even terminated. This problem is solved by adding a complexing agent to the second electrolyte that neutralizes the buffer that has been introduced.

It is an object of the present invention to provide a method for depositing a coating on a substrate from a trivalent chromium solution that avoids the formation of hexavalent chromium.

It is another object of the present invention to provide a method for depositing a coating on a substrate from a trivalent chromium solution that avoids the formation of chlorine gas.

It is a further object of the present invention to provide a chromium-chromium oxide (Cr-CrOx) layer on a steel substrate, in a single step, at high speed from a simple electrolyte without a buffer based on trivalent Cr chemistry.

The first aspect of the invention relates to a method for manufacturing a chromium metal - chromium oxide coated substrate by electrolytically depositing the chromium metal - chromium oxide coating on an electrically conductive substrate from an electrolyte solution that comprises a trivalent chromium compound and a chelating agent, wherein the electrolyte solution is free of chloride ions and of a boric acid buffering agent, the electrically conductive substrate acts as a cathode and an anode comprising a catalytic coating of iridium oxide or a mixed metal oxide is chosen for reducing or eliminating the oxidation of Cr(III)-ions to Cr(VI)-ions.

The inventors found that irrespective of the catalytic coating material (platinum, iridium oxide or a mixed metal oxide), toxic chlorine gas was formed at the anode when the chromium-chromium oxide coating was electrolytically deposited from a chloride containing trivalent chromium based electrolyte. While it was found that a depolariser such as bromide strongly suppressed this harmful side reaction, the formation of chlorine gas could not be prevented completely. In order to prevent the evolution of chlorine gas at the anode, chloride containing compounds, e.g. conductivity enhancing salts such as potassium chloride, were omitted from the trivalent chromium based electrolyte.

The boric acid buffering agent was initially omitted from the trivalent chromium based electrolyte so that chromium oxide would preferentially form on the cathode, i.e. in preference to chromium metal. The absence of the boric acid buffering agent in the electrolyte has the effect that the anode becomes very acidic:

2H₂O →4H⁺ + O₂(g) + 4e⁻

As a result of the above reaction, it was understood that the oxidation of Cr(III) to Cr(VI) is avoided or at least suppressed:

Cr³⁺ + 4H₂O ⇔ HCrO₄⁻ + 7H⁺ + 3e⁻

However, when the electrodepositon of the chromium-chromium oxide coating was carried out in the presence of the electrolyte of the invention, i.e. an electrolyte without chloride ions and without a boric acid buffering agent, a sulphate containing conductivity enhancing salt and an anode comprising a catalytic coating of platinum, a significant amount of hexavalent chromium was observed at the anode. Surprisingly, it was found that the formation of hexavalent chromium was avoided when the catalytic coating of platinum was replaced by a catalytic coating of iridium oxide or mixed metal oxide. However, when the boric acid buffering agent was re-introduced into the above chloride-free trivalent chromium based electrolyte, a significant amount of hexavalent chromium was once again formed at the anode, even when the anode comprised an iridium oxide or mixed metal oxide catalytic coating.

The omission of boric acid from the electrolyte and the selection of an iridium oxide or mixed metal oxide coated anode has the further advantage that it is not necessary to provide the electrolyte with additives, e.g. Mn²⁺ ions, in order to suppress or avoid the formation of hexavalent chromium.

In a preferred embodiment the electrolyte comprises a conductivity enhancing salt, preferably an alkali metal sulphate, more preferably potassium sulphate. The inventors found that conductivity enhancing salts based on alkali metal sulphates were suitable replacements for conductivity enhancing salts based on chlorides in that good electrolyte conductivity was still obtained, albeit to a lesser degree. An additional advantage is that the use of such electrolytes in combination with iridium oxide or mixed metal oxide anode coatings avoids the formation of harmful by-products such as hexavalent chromium and chlorine. It was found that electrolytes that contained potassium sulphate as the conductivity enhancing salt were very suitable for increasing the conductivity of the electrolyte. Chloride free-lithium, sodium or ammonium salts are also very suitable for increasing the conductivity of the electrolyte. Sodium sulphate is particularly preferred since the solubility of sodium sulphate is much higher than the solubility of potassium sulphate. A higher salt concentration increases the kinematic viscosity of the electrolyte and enables the use of lower currents for depositing chromium-chromium oxide coatings. By lowering the current density, the risk of unwanted side reactions, e.g. oxidation of Cr³⁺ to Cr⁶⁺, is reduced and the working lifetime of the catalytic coating may be extended.

In a preferred embodiment the chelating agent comprises an alkali metal cation and a carboxylate. The benefit of using an alkali metal cation is that its presence greatly enhances the conductivity of the electrolyte. Potassium cations are particularly preferred for this purpose, since compared to other alkali metal cations, they afford the greatest conductivity enhancement. Chelating agents comprising carboxylate anions, preferably having between 1 and 6 carbon atoms, were used to improve the coating characteristics of the chromium-chromium oxide coating. Suitable carboxylate anions include oxalate, malate, acetate and formate, with formate being most preferred since very good coating characteristics are obtained. The above carboxylate anions are weak chelating agents and may be used alone or in combination. These weak chelating agents destabilise the very stable hexa-aqua complex, where L⁻ represents the chelating agent ligand:

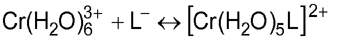

When the electrolyte comprises sodium sulphate it is preferred to use sodium formate, for instance instead of potassium formate, since this simplifies the electrolyte composition.

In a preferred embodiment the electrolyte solution is free of a buffering agent. It has been found that the absence of a buffering agent in the electrolyte enables chromium oxide to be deposited in preference to chromium metal. Further, the omission of a boric acid buffering agent from the electrolyte means that the oxidation of Cr(III) to Cr(VI) is prevented or at least suppressed when the electrolyte comprises an alkali metal sulphate as the conductivity enhancing salt. By omitting the buffer from the electrolyte the surface pH at the cathode increases to between 6.5 and 11.5 such that chromium oxide will be deposited in addition to chromium metal.

The present inventors also discovered that for the production of ECCS via trivalent Cr chemistry only one simple electrolyte without a buffer is required. Even though this simple electrolyte does not contain a buffer it was found by the present inventors that surprisingly also Cr metal is deposited from this electrolyte due to partial reduction of Cr oxide into Cr metal. This discovery simplifies the overall ECCS production enormously, because an electrolyte with a buffer for depositing Cr metal is not required as is wrongfully assumed by US6004488, but only one simple electrolyte without a buffer, which also solves the problem of contamination of this electrolyte with a buffer.

In a preferred embodiment the trivalent chromium compound comprises basic chromium(III) sulphate. Basic chromium sulphate is very suitable as an alternative to chloride containing chromium compounds such as chromium(III) chloride. By using basic chromium sulphate in the electrolyte instead of a chloride containing chromium compound, the risk of producing chlorine gas at the anode is avoided. Other preferred trivalent chromium salts comprise chromium(III) formate, chromium(III) oxalate, chromium(III) acetate, chromium(III) potassium oxalate and chromium(III) nitrate. The above salts, including basic chromium(III) sulphate may be provided alone or in combination.

In a preferred embodiment the mixed metal oxide comprises oxides of iridium and tantalum. Typically, the anode is provided with an electro-catalytic coating based on platinum. However, the inventors found that hexavalent chromium was produced when this type of anode was brought into contact with a chloride-free trivalent chromium based electrolyte. It was found that electro-catalytic coatings comprising a mixture of iridium oxide and tantalum oxide did not cause hexavalent chromium to form at the anode when the anode was immersed in the chloride-free trivalent chromium based electrolyte.

In a preferred embodiment the electrolyte solution is free of a depolariser, preferably potassium bromide. According to EP0747510, the presence of a depolariser such as bromide in a trivalent chromium based electrolyte suppresses the oxidation of Cr(III) to Cr(VI). However, the inventors found that despite the absence of a depolariser in the electrolyte, no hexavalent chromium was formed at the anode (platinum coated) when the electrolyte was a chloride trivalent chromium based electrolyte. Instead, it was found that the depolariser suppresses chlorine formation. The inventors also found that when the trivalent chromium based electrolyte of the invention comprised a depolariser and a sulphate based conductivity enhancing salt, a significant amount of hexavalent chromium was formed at the platinum coated anode. Moreover, it was found that bromine gas was formed when the depolariser comprised potassium bromide. Bromine gas is potentially harmful to the environment and to the workers and is therefore undesirable. The inventors discovered that in order to avoid hexavalent chromium formation, it is not necessary to provide a depolariser, e.g. potassium bromide, when the electrodeposition is carried out in the presence of a trivalent chromium based electrolyte comprising a sulphate based conductivity enhancing salt and a mixed metal oxide coated anode. Hexavalent chromium is also not formed at iridium oxide coated anodes when the depolariser is absent from the trivalent chromium based electrolyte.

In a preferred embodiment the pH of the electrolyte solution is adjusted to between pH 2.6 and pH 3.4, preferably to between pH 2.8 and pH 3.0. It was found that pH of the electrolyte influences the composition, the surface appearance, e.g. colour, and the surface morphology of the chromium-chromium oxide coating. With respect to the effect of pH on the composition of the chromium-chromium oxide coating, it was found that the amount of chromium metal deposited at the cathode could be increased by providing a trivalent chromium based electrolyte having a pH between pH 2.6 and 3.0. On the other hand, if the pH of the electrolyte is adjusted to above pH 3.0, chromium oxide is deposited in preference to chromium metal.

It is also understood that the surface pH has an effect on the surface appearance of the deposited coating. In this respect it was observed that the surface appearance of the chromium-chromium oxide coating changed from grey to a brownish colour as the electrolyte pH was increased. This has been attributed to the composition of the chromium-chromium oxide coating containing more chromium metal (grey) at low pH and more chromium oxide (brown) at higher pH. With respect to surface appearance it is preferred to provide an electrolyte having a pH between 2.6 and 3.0 so as to obtain a chromium-chromium oxide coating that is predominantly grey in colour.

The electrolyte pH also has a direct impact on the surface morphology of the chromium-chromium oxide coating. In this respect, the use of an electrolyte having a pH above 3.0 resulted in a chromium-chromium oxide coating having a relatively open and coarse structure. In contrast, when the pH was between 2.6 and 3.0, preferably between 2.8 and 3.0, the obtained chromium-chromium oxide coating was characterised by a more compact coating structure that exhibited reduced porosity relative to coatings deposited at a pH above 3.0. From a surface morphology perspective, it is preferred to provide an electrolyte having a pH between 2.8 and 3.0 since a greater improvement in the passivation properties of the coating can be obtained in view of the reduced porosity of such coatings.

It has also been found that the electrolyte pH influences the rate at which the chromium-chromium oxide coating is deposited on the substrate. This can be understood by considering the chromium oxide deposition mechanism. The deposition of chromium oxide at the cathode occurs at a pH between 6.5 and 11.5 and is driven by the reduction of H⁺ (H₃O⁺) to H₂ (g). With this mechanism in mind, the use of an electrolyte having an acidic pH will increase the electrolysis time that is required to deposit the chromium-chromium oxide coating since more H⁺ must be reduced to increase the surface pH to a value between 6.5 and 11.5 such that chromium oxide will be deposited. Since an increase in electrolysis time will result in a more expensive manufacturing process, it is preferred to provide an electrolyte with a pH of at least 3.4. However, in view of the effects mentioned above with respect to the composition, appearance and morphology of the deposited chromium-chromium oxide coating, an electrolyte pH of at least 2.8 is preferred.

It was found that the temperature of the electrolyte solution also influences the deposition reaction and the surface appearance of the chromium-chromium oxide coating. It was found that an electrolyte solution having a temperature between 30°C and 70°C is very suitable for depositing a chromium-chromium oxide coating with a good surface appearance. Preferably the temperature of the electrolyte solution is between 40°C and 60°C since this leads to a more efficient deposition reaction. Within this temperature range, the electrolyte solution exhibits good conductivity, meaning that less power is required to deposit the chromium-chromium oxide coating.

In a preferred embodiment the electrically conductive substrate is provided by electrolytically depositing a tin coating on one or both sides of a steel substrate and subjecting the tin coated steel to a diffusion annealing treatment to form an iron-tin alloy on the steel.

Preferably the steel substrate comprises a recrystalisation annealed single reduced steel or a double reduced steel that was subjected to a recrystalisation annealing treatment between a first rolling treatment and a second rolling treatment. The tin coating may be provided onto one or both sides of the steel substrate in a tin electroplating step, wherein the tin coating weight is at most 1000 mg/m² and preferably between at least 100 and/or at most 600 mg/m² of the substrate surface. By diffusion annealing the tin plated substrate at a temperature of at least 513 °C in a reducing atmosphere, the tin layer is converted into an iron-tin alloy that contains at least 80 weight percent (wt.%) of FeSn (50 at.% iron and 50 at.% tin). This substrate may then be cooled rapidly in an inert, non-oxidising cooling medium, while keeping the coated substrate in a reducing or inert gas atmosphere prior to cooling, so as to obtain a robust, stable surface oxide. The FeSn alloy layer provides corrosion protection to the underlying steel substrate. This is partly achieved by shielding the substrate, as the FeSn alloy layer is very dense and has a very low porosity. Moreover, the FeSn alloy itself is very corrosion resistant by nature.

In a preferred embodiment the electrically conductive substrate comprises blackplate or tinplate. It was found that the method of the invention is very suitable for depositing the chromium-chromium oxide coating onto blackplate (also known as uncoated steel) and tinplate, which are both commonly used in the packaging industry.

In a preferred embodiment an organic coating is provided on one or both sides of the chromium metal - chromium oxide coated substrate. It was found that organic coatings could be readily applied on to the chromium-chromium oxide coating, which itself acts a passivation layer to protect the electrically conductive substrate. In the case of tinplate or of a steel substrate provided with an FeSn layer, the chromium-chromium oxide coating is provided to passivate the tin surface in order to prevent or at least reduce the growth of tin oxides, which over time, may cause an applied organic coating to delaminate from the substrate. The chromium-chromium oxide coating also exhibited good adhesion to the electrically conductive substrate and to the subsequently applied organic coating. The organic coating may be provided as a lacquer or as a thermoplastic polymer coating. Preferably the thermoplastic polymer coating is a polymer coating system that comprises one or more layers of thermoplastic resins such as polyesters or polyolefins, but can also include acrylic resins, polyamides, polyvinyl chloride, fluorocarbon resins, polycarbonates, styrene type resins, ABS resins, chlorinated polyethers, ionomers, urethane resins and functionalised polymers. For clarification:
- Polyester is a polymer composed of dicarboxylic acid and glycol. Examples of suitable dicarboxylic acids include therephthalic acid, isophthalic acid, naphthalene dicarboxylic acid and cyclohexane dicarboxylic acid. Examples of suitable glycols include ethylene glycol, propane diol, butane diol, hexane diol, cyclohexane diol, cyclohexane dimethanol, neopentyl glycol etc. More than two kinds of dicarboxylic acid or glycol may be used together.
- Polyolefins include for example polymers or copolymers of ethylene, propylene, 1-butene, 1-pentene, 1-hexene or 1-octene.
- Acrylic resins include for example polymers or copolymers of acrylic acid, methacrylic acid, acrylic acid ester, methacrylic acid ester or acrylamide.
- Polyamide resins include for example so-called Nylon 6, Nylon 66, Nylon 46, Nylon 610 and Nylon 11.
- Polyvinyl chloride includes homopolymers and copolymers, for example with ethylene or vinyl acetate.
- Fluorocarbon resins include for example tetrafluorinated polyethylene, trifluorinated monochlorinated polyethylene, hexafluorinated ethylenepropylene resin, polyvinyl fluoride and polyvinylidene fluoride.
- Functionalised polymers for instance by maleic anhydride grafting, include for example modified polyethylenes, modified polypropylenes, modified ethylene acrylate copolymers and modified ethylene vinyl acetates.

Mixtures of two or more resins can be used. Further, the resin may be mixed with anti-oxidant, heat stabiliser, UV absorbent, plasticiser, pigment, nucleating agent, antistatic agent, release agent, anti-blocking agent, etc. The use of such thermoplastic polymer coating systems have shown to provide excellent performance in can-making and use of the can, such as shelf-life.

The second aspect of the invention relates to a chromium metal - chromium oxide coated substrate produced according to the first aspect of the invention. The advantages of one or more embodiments described in association with the first aspect of the invention, similarly apply to the second aspect of the invention.

Chromium carbide was present in the chromium-chromium oxide coating in the chromium metal layer adjacent to the cathode (it was not found in the chromium oxide layer). It is understood that the anion of the chelating agent, e.g. formate, may be the source of the carbide. It is believed that the presence of chromium carbide in the chromium metal promotes growth in the upwards direction relative to the substrate.

Organic carbon was predominantly found in the chromium oxide layer, but was also found in the chromium metal layer, more specifically, between the grains of chromium metal in the chromium metal layer. Chromium carbide could be found at these grain boundaries.

Chromium sulphate was also found in the chromium-chromium oxide coating. More specifically, sulphate was present in the chromium oxide layer, which indicates that sulphur is incorporated into (bound to) the chromium oxide layer during its formation.

The third aspect of the invention relates to the use of the chromium metal - chromium oxide coated substrate in packaging applications.

The invention will now be elucidated by way of some examples. These examples are intended to enable those skilled in the art to practice the invention and do not in anyway limit the scope of the invention as defined by the claims.

A packaging steel sample (consisting of a commonly used low carbon steel grade and temper) was cleaned in a commercial alkaline cleaner (Chela Clean KC-25 supplied by Foster Chemicals), rinsed in de-ionised water, pickled in a 5 % sulphuric acid solution at 25°C for 10 s, and rinsed again. The sample was plated with a tin coating (600mg/m²) from a MSA (Methane Sulphonic Acid) bath that is commonly used for the production of tinplate in a continuous plating line. A current density of 10 A/dm² was applied for 1s.

To form an iron-tin alloy on the steel, the tin plated steel sample was annealed in a reducing gas atmosphere, using HNX containing 5 % H₂(g). The sample was then heated from room temperature to 600 °C at a heating rate of 100 °C/s. Immediately after the sample had reached its peak temperature of 600 °C, the sample was cooled down in 1 s to a temperature of 80 °C by means of a water quench. The iron-tin alloy layer that was formed contained more than 90 % of the FeSn alloy phase.

The steel sample with the FeSn alloy layer was provided in a rectangular plating cell with grooves along the side walls for holding the sample and the anodes. The chromium-chromium oxide coating was deposited from an electrolyte containing 120 g/l basic chromium sulphate, 80 g/l potassium sulphate and 51 g/l potassium formate. This electrolyte solution was free from chlorides, a buffering agent, e.g. boric acid, and a depolariser such as potassium bromide. The pH of this electrolyte was approximately 3.85. The temperature of the electrolyte solution was 50°C.

In order to determine the effect of pH on electrolysis time, current density and colour when depositing chromium-chromium oxide coatings, the pH of the electrolyte was stepwise adjusted from pH 3.85 to 3.4, 3.2, 3.0, 2.8 and 2.6 respectively by adding sulphuric acid (98 wt%). At each pH the electrolysis time was determined for depositing a total Cr coating weight of ∼ 60 mg/m², as determined by X-ray fluorescence (XRF) analysis using a SPECTRO XEPOS XRF spectrometer with a Si-Drift Detector.

Similarly, the current density was determined at a fixed electrolysis time of 1 s. In each of these experiments the colour of the chromium-chromium oxide coating was determined using a Minolta CM-2002 spectrophotometer according to the well known CIELab system. The CIELab system uses three colour values L*, a* and b* for describing colours, which are calculated from the so-called tristimulus values X, Y and Z. L* represents the lightness of the colour (L* = 0 yields black and L* = 100 indicates diffuse white). The a* value represents the green-red chromatic axis in the CIELab colour space. The b* value represents the blue-yellow chromatic axis. The results of the deposition experiments and the colour measurements are shown in Table 1.

The results showed that either a longer electrolysis time or higher current density is required to deposit the same amount of chromium when the electrolyte becomes more acid. It can also be seen from the colour measurements that as the pH increases the colour of the chromium-chromium oxide deposit changes from pure grey to a brownish colour. From the above experiments it seems that by using an electrolyte having a pH of approximately 3.0, the best compromise between deposition rate and appearance is obtained. In applications where the appearance of the coating is less important, it follows that the pH of the electrolyte can be increased to a more basic pH so as to reduce the electrolysis time or the current density. In doing so, a more cost effective manufacturing process will be obtained.

Experiments to investigate the effect of pH on surface morphology were also performed using a Zeiss-Ultra 55 FEG-SEM (Field Emission Gun - Scanning Electron Microscope). For optimal image resolution on the outer surface of the samples, a low acceleration voltage of 1 kV was used, in combination with a short working distance and small aperture.

A change in the surface morphology of the chromium-chromium oxide layer was observed upon adjustment of the electrolyte pH. In this respect a relatively open and coarse coating structure was obtained when the pH of the electrolyte was adjusted to above 3.0. In contrast, when the electrolyte pH was adjusted to between 2.6 and 3.0, a relatively compact, non-porous coating was obtained that exhibits good passivation properties.

**Table 1**

| pH | Current density | Electrolysis time | Cr (XRF) | Results of colour measurements | | |
|---|---|---|---|---|---|---|
| | [A/dm²] | [s] | [mg/m²] | L* | a* | b* |
| 2.60 | **15.0** | 1.45 | 63.0 | 71.8 | 0.1 | -0.1 |
| 2.80 | **15.0** | 1.15 | 64.0 | 69.2 | 0.3 | 1.3 |
| 3.00 | **15.0** | 1.00 | 62.5 | 69.2 | 0.3 | 1.6 |
| 3.20 | **15.0** | 0.95 | 62.3 | 68.9 | 0.3 | 1.9 |
| 3.40 | **15.0** | 0.90 | 64.7 | 63.9 | 0.7 | 5.1 |
| 2.60 | 17.9 | **1.00** | 65.4 | 73.0 | 0.0 | -0.3 |
| 2.80 | 16.0 | **1.00** | 59.4 | 70.6 | 0.2 | 0.7 |
| 3.00 | 15.0 | **1.00** | 62.5 | 69.2 | 0.3 | 1.6 |
| 3.20 | 14.5 | **1.00** | 61.4 | 66.7 | 0.5 | 3.7 |
| 3.40 | 14.0 | **1.00** | 65.8 | 63.7 | 0.7 | 5.5 |

For obtaining chemical information of these samples, Energy Dispersive X-ray (EDX) analysis was performed with a standard acceleration voltage of 15 kV, standard working distance and aperture. These settings resulted in a dead time between 0 - 35 %. For all samples an average EDX spectrum was collected on an area of 1000 µm × 750 µm for 50 s.

The obtained EDX spectra showed that the amount of oxygen in the chromium-chromium oxide coating increased with increasing pH, indicating that chromium oxide is deposited preferentially over chromium metal as the electrolyte becomes less acid. The EDX spectra also revealed the presence of chromium sulphate in the chromium-chromium oxide coating.

X-ray photoelectron spectroscopy (XPS) was also used to characterise the samples (Table 2). XPS spectra and depth profiles were recorded on a Kratos Axis Ultra using Mg K_ X-rays of 1253.6 eV. The measured spot size was 700 µm × 300 µm. The depth profiles were recorded using 4 keV Ar+ ions creating a sputter crater of 3 mm × 3 mm. The sputter rate was calibrated using a BCR standard of 30 nm Ta₂O₅ on Ta and was 2.15 nm/min. The sputter rate for Cr-species is expected to be similar to Ta₂O₅.

In agreement with the SEM/EDX analysis, the amount of chromium oxide that is deposited increases significantly when the pH of the electrolyte is above pH 3.0. The XPS measurements also showed that at higher pH, the increase in the amount of deposited chromium oxide is larger when a constant current density is used compared to when the current density is varied and the electrolysis time is kept constant. These same trends were observed when analysing the sulphate content in the deposited coating and that sulphate was present throughout the whole chromium oxide layer, which indicates that the sulphate is bound to the chromium oxide and not just dispersed therein. This was confirmed when the samples were subsequently rinsed in deionised water and no significant reduction in the sulphate content was observed. It was also found that chromium oxide is formed during the deposition and not afterwards when the samples are exposed to the atmosphere, i.e. by the oxidation of chromium metal by air.

It could also be seen that both chromium metal and chromium carbide were deposited together and that the chromium metal content reduced as the pH became less acid, particularly at a pH above 3.0. Further, chromium carbide was predominantly found in the chromium metal layer adjacent to the iron-tin alloy. When the chelating agent was omitted from the electrolyte, no chromium carbide was observed in the chromium layer, indicating that the chelating agent, in this case potassium formate, is the source of the carbide. Organic carbon, i.e. carbon not in carbide form, was found in the chromium oxide layer.

The porosity of the coatings was also measured by integrating the atomic percentage (as determined by XPS) of Sn + Fe/Cr over the outermost 3.2 nm of the coating. Each coating, with the exception of the outlier at pH 2.6, exhibited a porosity of less than 3.0 %.

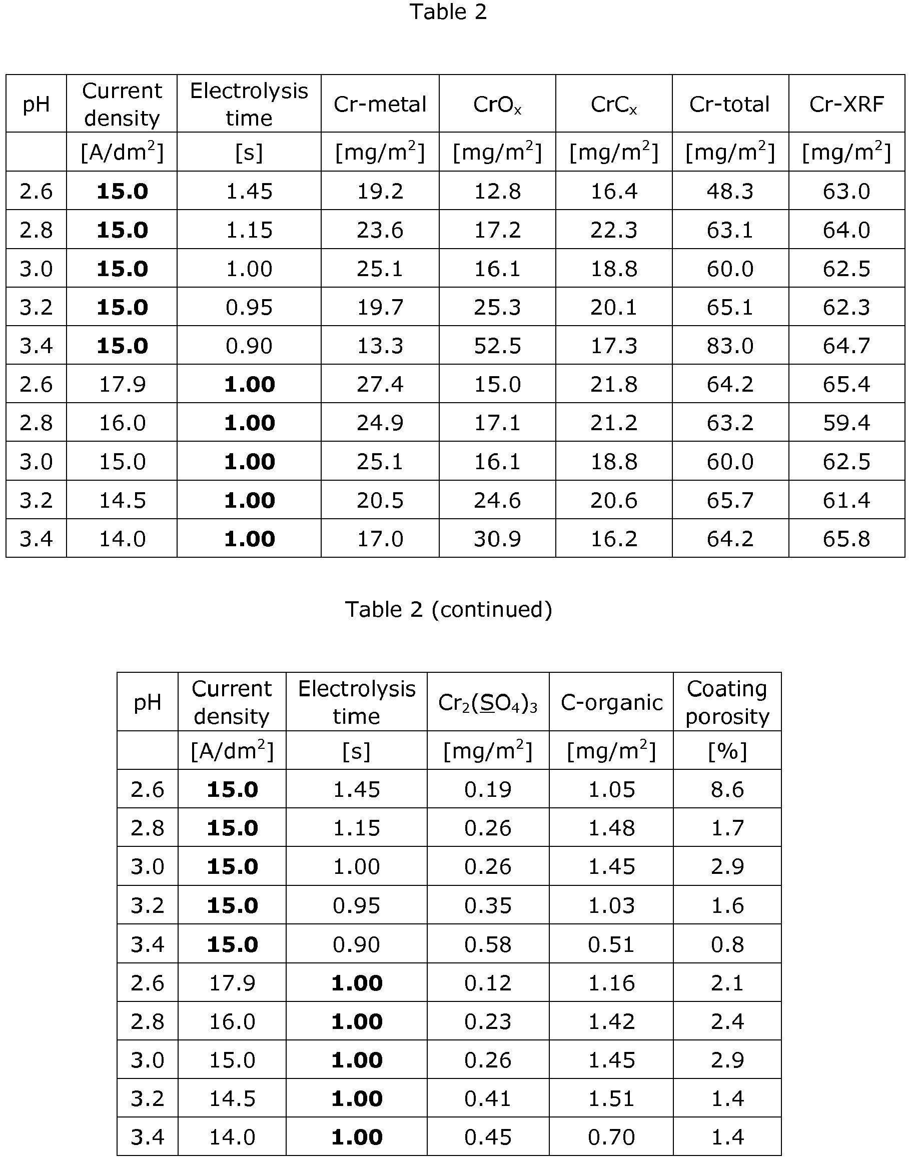

An investigation was also carried out to understand under what circumstances hexavalent chromium and/or other harmful by-products were formed at the anode. Each electrolyte contained 120 g/l basic chromium sulphate. The electro-active surface area of the anode was 122 mm x 10 mm. The anodic current density was 60 A/dm². The ambient air above the solution was analysed by means of chlorine 0.2/a Dräger Tubes®. The Cr(VI) concentration in the Cr(III) electrolyte was analysed by means of Differential Pulse Polarography (DPP). The results of the investigation after 5 h electrolysis are shown in Table 3 below.

The results show that when the electrolyte contains chloride ions (Test no.1 and no.2), chlorine gas is produced at the anode and that the presence of a depolariser such as bromide in the electrolyte strongly suppresses, but does not eliminate this harmful side reaction (Test no.1). The results also show that the presence of bromide in the electrolyte plays no role in preventing the formation of hexavalent chromium at the anode when the electrolyte contains chloride ions (cf. Test no.1 and Test no.2).

When the conductivity enhancing salt comprises sulphates instead of chlorides, significant amounts of hexavalent chromium are formed at the anode when the anode comprises a catalytic coating of platinum (cf. Test no.3 and no.4). The presence of bromide in a sulphate containing electrolyte can be seen to even increase the formation of hexavalent chromium. However, when the catalytic coating of platinum was replaced by a catalytic coating of a mixed metal oxide of tantalum oxide and iridium oxide, no hexavalent chromium was formed at the anode (Test no.5 and no.6). The presence of potassium bromide in the electrolyte (Test no.5) appeared not to play a role in preventing the formation of hexavalent chromium. The formation of hexavalent chromium at the anode was also avoided when the anode comprised an iridium oxide catalytic coating (Test no.7 and no.8). However, when the chloride-free electrolyte comprised sulphates and boric acid, hexavalent chromium at the anode was once again observed (Test no.9). The results suggest that when an electrolyte is free of chloride ions (so as to avoid the formation of chlorine at the anode) and an alkali metal sulphate is used as a conductivity enhancing salt, the electrolyte should be free of a boric acid buffering agent and the anode should not comprise a platinum or platinum based catalytic coating (so as to avoid the formation of hexavalent chromium at the anode).

Experiments were also performed to investigate the composition of chromium-chromium oxide coatings that were (i) deposited according to the method of the present invention (one-step process) or (ii) deposited in accordance with the method of EP0747510 (two-step process). It was found that the use of a one-step or a two-step deposition process influenced the composition of the deposited chromium-chromium oxide coating. Specifically, chromium-chromium oxide coatings obtained from a two-step process contained less chromium oxide than chromium-chromium oxide coatings obtained from a one-step process. Moreover, when a two-step deposition process was used, a greater proportion of chromium oxide was concentrated at the surface of the chromium-chromium oxide coating, whereas chromium oxide was more evenly distributed throughout the chromium-chromium oxide coating obtained from a one-step deposition process. It was also found that the chromium-carbide content was significantly higher for chromium-chromium oxide coatings obtained from a two-step process compared to those obtained from a one-step process.

**Table 3**

| Test | KCl | K₂SO₄ | KBr | CHKO₂ | H₃BO₃ | Anode | Cl₂(g) and/or Br₂(g) | Cr(VI) |
|---|---|---|---|---|---|---|---|---|
| no. | [g/l] | [g/l] | [g/l] | [g/l] | [g/l] | coating | [ppm] | [mg/l] |
| 1 | 250 | 0 | 15 | 51.2 | 0 | Pt | 0.2 | 0 |
| 2 | 250 | 0 | 0 | 51.2 | 0 | Pt | > 30 Cl₂(g) | 0 |
| 3 | 0 | 80 | 15 | 51.2 | 0 | Pt | 0.5 Br₂(g) | 1281 |
| 4 | 0 | 80 | 0 | 51.2 | 0 | Pt | 0 | 732 |
| 5 | 0 | 80 | 15 | 51.2 | 0 | MMO | 0 | 0 |
| 6 | 0 | 80 | 0 | 51.2 | 0 | MMO | 0 | 0 |
| 7 | 0 | 80 | 0 | 51.2 | 0 | IrO₂ | 0 | 0 |
| 8 | 0 | 80 | 0 | 0 | 0 | IrO₂ | 0 | 0 |
| 9 | 0 | 80 | 0 | 0 | 75 | IrO₂ | 0 | 212 |

## Claims

1. Method for manufacturing a chromium metal - chromium oxide coated substrate by electrolytically depositing the chromium metal - chromium oxide coating on an electrically conductive substrate from an electrolyte solution that comprises a trivalent chromium compound and a chelating agent, wherein the electrolyte solution is free of chloride ions and of a boric acid buffering agent, the electrically conductive substrate acts as a cathode and an anode comprising a catalytic coating of iridium oxide or a mixed metal oxide is chosen for reducing or eliminating the oxidation of Cr(III)-ions to Cr(VI)-ions.

2. Method according to claim 1, wherein the electrolyte comprises a conductivity enhancing salt, preferably an alkali metal sulphate, more preferably potassium sulphate or sodium sulphate.

3. Method according to claim 1 or claim 2, wherein the chelating agent comprises an alkali metal carboxylate, preferably potassium formate or sodium formate.

4. Method according to any one of the preceding claims, wherein the electrolyte solution is free of a buffering agent.

5. Method according to any one of the preceding claims, wherein the trivalent chromium compound comprises basic chromium (III) sulphate.

6. Method according to any one of the preceding claims, wherein the mixed metal oxide comprises oxides of iridium and tantalum.

7. Method according to any one of the preceding claims, wherein the electrolyte solution is free of a depolariser, preferably potassium bromide.

8. Method according to any one of the preceding claims, wherein the pH of the electrolyte solution is adjusted to between pH 2.6 and pH 3.4, preferably between pH 2.8 and pH 3.0.

9. Method according to any one of the preceding claims, wherein the electrically conductive substrate is provided by electrolytically depositing a tin coating on one or both sides of a steel substrate and subjecting the tin coated steel to a diffusion annealing treatment to form an iron-tin alloy on the steel.

10. Method according to any one of claims 1-8, wherein the electrically conductive substrate comprises blackplate or tinplate.

11. Method according to any one of the preceding claims, wherein an organic coating is provided on one or both sides of the chromium metal - chromium oxide coated substrate.

12. Chromium metal - chromium oxide coated substrate produced according to **the method of** any one of the preceding claims, wherein the coating additionally comprises chromium carbide.

13. Chromium metal - chromium oxide coated substrate according to claim 12, wherein the coating additionally comprises organic carbon.

14. Chromium metal-chromium oxide coated substrate according to claim 12 or claim 13, wherein the coating additionally comprises chromium sulphate.

15. Use of the chromium metal - chromium oxide coated substrate according to any one of claims 12-14 in packaging applications.

## Patentansprüche

1. Verfahren zur Herstellung eines mit Chrommetall-Chromoxid beschichteten Substrats durch elektrolytisches Aufbringen der Chrommetall-Chromoxid-Beschichtung auf ein elektrisch leitfähiges Substrat aus einer Elektrolytlösung, die eine dreiwertige Chromverbindung und einen Komplexbildner umfasst, wobei die Elektrolytlösung frei von Chloridionen und einem Borsäure-Pufferungsmittel ist, wobei das elektrisch leitfähige Substrat als eine Kathode wirkt, und wobei eine Anode gewählt wird die eine katalytische Beschichtung aus Iridiumoxid umfasst, oder aus ein gemischtes Metalloxid, um der Oxidation von Cr(III)-Ionen zu Cr(VI)-Ionen zu Reduzieren oder Eliminieren.

2. Verfahren nach Anspruch 1, wobei das Elektrolyt ein Salz zur Verbesserung der Leitfähigkeit umfasst, vorzugsweise ein Alkalimetallsulfat, mehr vorzugsweise Kaliumsulfat oder Natriumsulfat.

3. Verfahren nach Anspruch 1 oder Anspruch 2, wobei der Komplexbildner ein Alkalimetallcarboxylat umfasst, vorzugsweise Kaliumformat oder Natriumformat.

4. Verfahren nach einem der vorherigen Ansprüche, wobei die Elektrolytlösung frei von einem Pufferungsmittel ist.

5. Verfahren nach einem der vorherigen Ansprüche, wobei die dreiwertige Chromverbindung basisches Chrom(III)-Sulfat umfasst.

6. Verfahren nach einem der vorherigen Ansprüche, wobei das gemischte Metalloxid Oxide von Iridium und Tantal umfasst.

7. Verfahren nach einem der vorherigen Ansprüche, wobei die Elektrolytlösung frei von einem Depolarisator ist, vorzugsweise Kaliumbromid.

8. Verfahren nach einem der vorherigen Ansprüche, wobei der pH-Wert der Elektrolytlösung auf zwischen pH 2,6 und pH 3,4, vorzugsweise zwischen pH 2,8 und pH 3,0 eingestellt wird.

9. Verfahren nach einem der vorherigen Ansprüche, wobei das elektrisch leitfähige Substrat durch elektrolytisches Aufbringen einer Zinnbeschichtung auf eine oder beide Seiten eines Stahlsubstrats und Unterziehen des zinnbeschichteten Stahls einer Diffusionsglühbehandlung zum Bilden einer Eisen-Zinn-Legierung auf dem Stahl bereitgestellt wird.

10. Verfahren nach einem der Ansprüche 1-8, wobei das elektrisch leitfähige Substrat eine Schwarzblech oder ein Weißblech umfasst.

11. Verfahren nach einem der vorherigen Ansprüche, wobei eine organische Beschichtung auf einer oder beiden Seiten des mit Chrommetall-Chromoxid beschichteten Substrats bereitgestellt ist.

12. Hergestelltes Chrommetall-Chromoxid beschichtetes Substrat gemäß dem Verfahren nach einem der vorherigen Ansprüche, wobei die Beschichtung zusätzlich Chromkarbid umfasst.

13. Chrommetall-Chromoxid beschichtetes Substrat nach Anspruch 12, wobei die Beschichtung zusätzlich organischen Kohlenstoff umfasst.

14. Chrommetall-Chromoxid beschichtetes Substrat nach Anspruch 12 oder Anspruch 13, wobei die Beschichtung zusätzlich Chromsulfat umfasst.

15. Verwendung des mit Chrommetall-Chromoxid beschichteten Substrats nach einem der Ansprüche 12-14 in Verpackungsanwendungen.

## Revendications

1. Procédé de fabrication d'un substrat revêtu de chrome métallique-oxyde de chrome par dépôt électrolytique du revêtement de chrome métallique-oxyde de chrome sur un substrat électriquement conducteur à partir d'une solution d'électrolyte qui comprend un composé de chrome trivalent et un agent de chélation, dans lequel la solution d'électrolyte est exempte d'ions chlorure et exempte d'un agent de tamponnage d'acide borique, le substrat électriquement conducteur agit comme une cathode, et une anode comprenant un revêtement catalytique d'oxyde d'iridium ou d'un oxyde de métal mixte est choisi pour réduire ou éliminer l'oxydation des ions Cr(III) à Cr(VI).

2. Procédé selon la revendication 1, dans lequel l'électrolyte comprend un sel améliorant la conductivité, de préférence un sulfate de métal alcalin, plus de préférence du sulfate de potassium ou du sulfate de sodium.

3. Procédé selon la revendication 1 ou la revendication 2, dans lequel l'agent de chélation comprend un carboxylate de métal alcalin, de préférence du formate de potassium ou du formate de sodium.

4. Procédé selon l'une quelconque des revendications précédentes, dans lequel la solution d'électrolyte est exempte d'agent de tamponnage.

5. Procédé selon l'une quelconque des revendications précédentes, dans lequel le composé de chrome trivalent comprend du sulfate de chrome basique (III).

6. Procédé selon l'une quelconque des revendications précédentes, dans lequel l'oxyde de métal mixte comprend des oxydes d'iridium et de tantale.

7. Procédé selon l'une quelconque des revendications précédentes, dans lequel la solution d'électrolyte est exempte de dépolarisant, de préférence du bromure de potassium.

8. Procédé selon l'une quelconque des revendications précédentes, dans lequel le pH de la solution d'électrolyte est ajustée entre pH 2,6 et pH 3,4, de préférence entre pH 2,8 et pH 3,0.

9. Procédé selon l'une quelconque des revendications précédentes, dans lequel le substrat électriquement conducteur est fourni par dépôt électrolytique d'un revêtement d'étain sur une ou deux faces d'un substrat en acier et en soumettant l'acier revêtu d'étain à un traitement par recuit de diffusion pour former un alliage fer-étain sur l'acier.

10. Procédé selon l'une quelconque des revendications 1-8, dans lequel le substrat électriquement conducteur comprend du fer noir ou de fer blanc.

11. Procédé selon l'une quelconque des revendications précédentes, dans lequel un revêtement organique est prévu sur une face ou les deux faces du substrat revêtu de chrome métallique-oxyde de chrome.

12. Substrat revêtu de chrome métallique-oxyde de chrome produit selon le procédé de l'une quelconque des revendications précédentes, où le revêtement comprend en outre du carbure de chrome.

13. Substrat revêtu de chrome métallique-oxyde de chrome selon la revendication 12, où le revêtement comprend en outre du carbone organique.

14. Substrat revêtu de chrome métallique-oxyde de chrome selon la revendication 12 ou la revendication 13, où le revêtement comprend en outre du sulfate de chrome.

15. Utilisation du substrat revêtu de chrome métallique-oxyde de chrome selon l'une quelconque des revendications 12-14 dans des applications d'emballage.
